# EUROPEAN PATENT APPLICATION

(11) **EP 3 675 560 A1**
(43) Date of publication of application: **01.07.2020**
(21) Application number: 18859696.9
(22) Date of filing: 18.09.2018
(51) Int. Cl.: H04W 40/02

(54) **ELECTRONIC DEVICE, WIRELESS COMMUNICATION METHOD AND COMPUTER READABLE MEDIUM**

(30) Priority: 22.09.2017 CN 201710866866
(71) Applicant: Sony Corporation, Tokyo 108-0075 (JP)
(72) Inventor: ZHANG, Wenbo, Beijing 100028 (CN); SUN, Chen, Beijing 100028 (CN)
(74) Representative: D Young & Co LLP
(86) International application number: PCT/CN2018/106150
(87) International publication number: WO 2019/057025

(57) **Abstract**

The present disclosure relates to an electronic device, a wireless communication method, and a computer readable medium. According to an embodiment, an electronic device for user equipment side comprises a processing circuit. The processing circuit is configured to: for a first communication resource allocated by a base station to a cellular link and a second communication resource allocated to a pass-through link, allocate resources to the cellular link and the pass-through link in a manner of sharing the first communication resource and the second communication resource; and carry out control to communicate data on the basis of the resource allocation.

## Description

### FIELD OF THE INVENTION

The present disclosure relates generally to the field of wireless communication, and more particularly, to an electronic device, a wireless communication method and a computer readable medium for user equipment side and base station side.

### BACKGROUND OF THE INVENTION

At present, demands on Further enhanced Device to Device (FeD2D) include saving energy, reducing equipment complexity, providing service continuity and the like, wherein an important requirement is to support Quality of Service (QoS) under different traffic types.

### SUMMARY OF THE INVENTION

A brief summary of embodiments of the present invention is given below to provide a basic understanding of some aspects of the present invention. It should be understood that the summary is not an exhaustive summary of the present invention. It does not intend to define a key or important part of the present invention, nor does it intend to limit the scope of the present invention. The object of the summary is only to briefly present some concepts, which serves as a preamble of the detailed description that follows.

According to an embodiment, an electronic device for user equipment side comprises processing circuitry. The processing circuitry is configured to: for a first communication resource allocated for a cellular link and a second communication resource allocated for a sidelink by a base station, perform a resource allocation for the cellular link and the sidelink in a manner of sharing the first communication resource and the second communication resource; and perform control to perform data communication based on the resource allocation.

According to another embodiment, a wireless communication method for user equipment side comprises: for a first communication resource allocated for a cellular link and a second communication resource allocated for a sidelink by a base station, performing resource allocation for the cellular link and the sidelink in a manner of sharing the first communication resource and the second communication resource; and performing data communication based on the resource allocation.

According to still another embodiment, an electronic device for base station side comprises processing circuitry. The processing circuitry is configured to: based on a resource request from a first user equipment, allocate a first communication resource for a cellular link and allocate a second communication resource for a sidelink; and perform control to perform data communication with the first user equipment, wherein the data communication is performed through a resource allocated by the user equipment for the cellular link in a manner of sharing the first communication resource and the second communication resource.

According to yet another embodiment, a wireless communication method for base station side comprises: based on a resource request from a first user equipment, allocating a first communication resource for a cellular link and allocate a second communication resource for a sidelink; and performing data communication with the first user equipment, wherein the data communication is performed through a resource allocated by the user equipment for the cellular link in a manner of sharing the first communication resource and the second communication resource.

According to still another embodiment, there is provided a computer readable medium comprising executable instructions that, when executed by an information processing apparatus, cause the information processing apparatus to perform the above-mentioned methods.

Embodiments of the present disclosure are advantageous to solving the problem of transmission conflict which may occur when a user equipment (UE) simultaneously needs to transmit Sidelink and Uulink communications in Device-to-Device communication (D2D), by sharing resources between a Sidelink channel and a Uulink channel.

### BRIEF DESCRIPTION OF THE DRAWINGS

The present invention could be better understood with reference to the description given below in combination with the appended drawings, wherein throughout the drawings, identical or like reference signs are used to represent identical or like components. The appended drawings together with the detailed description below are included in the specification and form a part of the specification, to further describe preferred embodiments of the present invention and explain the principles and advantages of the present invention by way of examples. In the appended drawings:
FIG. 1 is a block diagram showing a configuration example of an electronic device for user equipment side according to an embodiment of the present invention;
FIG. 2 is a block diagram showing a configuration example of an electronic device for user equipment side according to another embodiment of the present invention;
FIG. 3 is a flowchart showing a process example of a wireless communication method for user equipment side according to an embodiment of the present invention;
FIG. 4 is a block diagram showing a configuration example of an electronic device for base station side according to an embodiment of the present invention;
FIG. 5 is a flowchart showing a process example of a wireless communication method for base station side according to an embodiment of the present invention;
FIG. 6 is a block diagram showing a configuration example of an information processing apparatus for user equipment side according to an embodiment of the present invention;
FIG. 7 is a block diagram showing a configuration example of an information processing apparatus for base station side according to another embodiment of the present invention;
FIG. 8 is a schematic view for explaining an exemplary process of forwarding a Buffer State report (BSR);
FIG. 9 is a schematic view for explaining another exemplary process of forwarding a BSR;
FIG. 10A and FIG. 10B show an exemplary structure of a BSR Medium Access Control Control Element (MAC CE);
FIG. 11 shows an exemplary structure of another type of BSR MAC CE;
FIG. 12A through FIG. 12D show an exemplary structure of still another type of BSR MAC CE;
FIG. 13 through FIG. 15 are schematic views for explaining a communication resource allocation manner;
FIG. 16 and FIG. 17 are schematic views for explaining an exemplary manner of communication resource allocation based on Bucket Size Duration and Prioritized Bit Rate;
FIG. 18 is a block diagram showing an exemplary structure of a computer that implements methods and apparatuses of the present disclosure;
FIG. 19 is a block diagram showing an example of a schematic configuration of an intelligent telephone to which the technology of the present disclosure may be applied; and
FIG. 20 is a block diagram showing an example of a schematic configuration of a base station to which the technology of the present disclosure may be applied.

### DETAILED DESCRIPTION

Hereinafter, embodiments of the present invention will be described with reference to the appended drawings. Elements and features described in one figure or one embodiment of the present invention may be combined with elements and features described in one or more other figures or embodiments. It should be noted that, for the sake of clarity, representation and description of components and processing known to those ordinarily skilled which are irrelevant to the present invention are omitted in the appended drawings and the description.

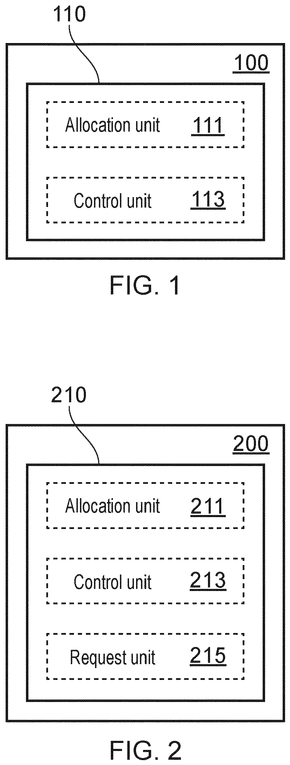

As shown in FIG. 1, an electronic device 100 for wireless communication according to the present embodiment comprises processing circuitry 110. The processing circuitry 110 can, for example, be realized as a specific chip, chipset or Central Processing Unit (CPU) or the like.

The processing circuitry 110 comprises an allocation unit 111 and a control unit 113. It should be noted that, although the allocation unit 111 and the control unit 113 are shown in the form of functional blocks in the figure, it should be understood that the functions of the respective units can also be realized by the processing circuitry as a whole, but not necessarily realized by discrete, actual components in the processing circuitry. In addition, although the processing circuitry is shown by one frame in the figure, the electronic device can comprise a plurality of processing circuitries, and can distribute the functions of the respective units to the plurality of processing circuitries so as to implement these functions through cooperative operations of the plurality of processing circuitries.

The allocation unit 111 is configured to: for a first communication resource allocated for Uulink and a second communication resource allocated for Sidelink by a base station, perform a resource allocation for the Uulink and the Sidelink in a manner of sharing the first communication resource and the second communication resource.

The control unit 113 is configured to perform control to perform data communication based on the resource allocation by the allocation unit 111.

In D2D, V2X communications, for example, when a relay user equipment (Relay UE) simultaneously needs to transmit Sidelink and Uulink communications, the problem of transmission conflict may occur. More specifically, due to half-duplex hardware limitations, the Relay UE cannot simultaneously transmit the Sidelink and the Uulink, and thus it is needed to distinguish the Sidelink and Uulink transmissions in terms of time or frequency. When the Relay UE is simultaneously allocated with a Sidelink resource and a Uulink resource, it is needed to consider how to allocate and use these resources.

According to embodiments of the present disclosure, a Sidelink resource and a Uulink resource are allocated between Sidelink and Uulink transmissions. Although, for example, resources are requested according to data in the current logical channel of a UE through a Scheduling Request (SR) or a Buffer State Report (BSR), and the base station has allocated a resource to the UE based on the SR or the BSR, the resource applied by the UE for the Sidelink can be used by the Uulink, and the resource applied for the Uulink can be used by the Sidelink.

Various manners can be adopted to cause the Sidelink and the Uulink to share the allocated resources. For example, for Ultra Reliable and Low Latency Communications (URLLC) traffic requirements, considering that URLLC requires low latency, when the Relay UE has a URLLC traffic, either the Sidelink resource or the Uulink resource can be used to send the URLLC traffic.

Furthermore, according to an embodiment, a resource allocation can be performed based on traffic priorities. More specifically, the resource allocation performed by the allocation unit 111 can comprise: determining priorities for a traffic of the Uulink and a traffic of the Sidelink, respectively; and based on comparisons of the determined priorities with predetermined thresholds, performing the resource allocation for the traffic of the Uulink and the traffic of the Sidelink. The predetermined threshold can be a determined value or a constraint range, that is, when the priorities satisfy a certain constraint range, the resource allocation can be performed for the traffic of the Uulink and the traffic of the Sidelink based on the satisfied constraint condition.

For example, when the priority of the traffic of Uulink is higher than a first threshold, it is possible to make the second communication resource available to the traffic of the Uulink; and/or when the priority of the traffic of the Sidelink is higher than a second threshold, it is possible to make the first communication resource available to the traffic of the Sidelink.

As an example but not a limitation, the priority of the traffic of the Uulink can be determined based on a Quality-of-Service class identifier (QCI).

The QCI for defining the priority of the traffic of the Uulink can, for example, include Resource Type (for example, including Guaranteed Bit Rate (GBR) or Non-Guaranteed Bit Rate (Non-GBR)), Priority Level, Packet Delay Budget (PDB), Packet Error Loss Rate, etc.

Table 1 shows an example of a correspondence among respective parameters, wherein the priority is higher in case of a smaller value of the QCI.

**Table 1:**

| QCI | Resoruce Type | Priortiy Level | Packet Delay Budget | Packet Error Loss Rate |
|---|---|---|---|---|
| 1 | GBR | 2 | 100 ms | 10⁻² |
| 2 | | 4 | 150 ms | 10⁻³ |
| 3 | | 3 | 50 ms | 10⁻³ |
| 4 | | 5 | 300 ms | 10⁻⁶ |
| 65 | | 0.7 | 75 ms | 10⁻² |
| 66 | | 2 | 100 ms | 10⁻² |
| 75 | | 2.5 | 50 ms | 10⁻² |
| 5 | Non-GBR | 1 | 100 ms | 10⁻⁶ |
| 6 | | 6 | 300 ms | 10⁻⁶ |
| 7 | | 7 | 100 ms | 10⁻³ |
| 8 | | 8 | 300 ms | 10⁻⁶ |
| 9 | | 9 | | |
| 69 | | 0.5 | 60 ms | 10⁻⁶ |
| 70 | | 5.5 | 200 ms | 10⁻⁶ |
| 79 | | 6.5 | 50 ms | 10⁻² |

On the other hand, the priority of the traffic of the Sidelink can be determined, for example, based on a ProSe Per-Packet Priority (PPPP).

The PPPP can correspond to Resource Type, Priority Level, Packet Delay Budget, Packet Error Loss Rate, etc. Table 2 shows an example of a correspondence.

**Table 2:**

| PPPP | Resoruce Type | Priortiy Level | Packet Delay Budget | Packet Error Loss Rate |
|---|---|---|---|---|
| 1 | GBR | 1 | 100 ms | 10-2 |
| 2 | | 2 | 150 ms | 10-3 |
| 3 | | 3 | 50 ms | 10-3 |
| 4 | | 4 | 300 ms | 10-6 |
| 5 | Non-GBR | 5 | 100 ms | 10-3 |
| 6 | | 6 | 50 ms | 10-2 |
| 7 | | 7 | | |
| 8 | | 8 | | |

To maintain respective independence of the Sidelink resource and the Uulink resource, while considering that not all Sidelink traffics and Uulink traffics have very high priorities, a priority threshold is set such that only a Sidelink traffic or a Uulink traffic with a priority higher than the threshold can preempt the resource of the counterpart.

For example, it is possible to set a priority threshold PriorityThresUulink for Uulink traffics. Without loss of generality, it is possible to set PriorityThresUulink=2.5, and accordingly, traffics with priorities higher than 2.5 (values of priority levels being less than or equal to 2.5) in Table 1 can use the resource of the Sidelink.

Furthermore, it is possible to set a priority threshold PriorityThresSidelink for Sidelink traffics. Without loss of generality, it is possible to set PriorityThresSidelink=3, and accordingly, traffics with priorities higher than 3 (values of priority levels being less than or equal to 3) in Table 2 can use the resource of the Uulink.

In the foregoing embodiment, priorities are determined for the Uulink and the Sidelink, respectively, and it is determined, through comparisons with respective priority thresholds, whether the resource of the counterpart can be used.

According to another embodiment, it is also possible to determine a correspondence between the priority of the traffic of the Uulink and the priority of the traffic of the Sidelink.

Further, the allocation unit 111 can be configured to: when the priority of the traffic of the Uulink is higher than a first threshold and the priority of the traffic of the Uulink is higher than a priority of the traffic of the Sidelink, make the second communication resource available to the traffic of the Uulink; and/or when the priority of the traffic of the Sidelink is higher than a second threshold and the priority of the traffic of the Sidelink is higher than a priority of the traffic of the Uulink, make the first communication resource available to the traffic of the Sidelink.

In other words, in the present embodiment, it is determined, not only based on comparisons of the Uulink and the Sidelink with the respective priority thresholds but also based on comparisons between the priorities of the Uulink and the Sidelink, whether the resource of the counterpart can be used.

Similarly to the foregoing embodiment, it is possible to, for example, determine the priority of the Uulink traffic based on the QCI and determine the priority of the Sidelink traffic based on the PPPP.

It should be noted that, there can be a direct mapping relationship between the priority of the Uulink traffic and the priority of the Sidelink traffic. Furthermore, it is also possible to establish a correspondence by means of intermediate variants (e.g., one or more of Resource Type, Priority Level, Packet Delay Budget, Packet Error Loss Rate, etc.), and to represent the priorities of the Sidelink and Uulink traffics by these parameters.

Furthermore, according to an embodiment, the resource allocation for the Uulink traffic and the Sidelink traffic can be performed based on logical channels. Accordingly, it is possible to configure priorities for the Sidelink and Uulink traffics in units of logical channels.

It should be noted that, in the case of performing the resource allocation for the Uulink traffic and the Sidelink traffic based on logical channels: when the priority of the Uulink traffic is higher than a predetermined threshold and the priority of the Uulink traffic is higher than a priority of at least one logical channel of the Sidelink (i.e., not necessarily higher than all logical channels of the Sidelink), it is possible to make the Sidelink resource available to the Uulink traffic; similarly, when the priority of the Sidelink traffic is higher than a predetermined threshold and the priority of the Sidelink traffic is higher than a priority of at least one logical channel of the Uulink (i.e., not necessarily higher than all logical channels of the Uulink), it is possible to make the Uulink resource available to the Sidelink traffic.

Taking the Sidelink as an example, similarly to the foregoing exemplary embodiment, a priority of a Sidelink logical channel can be defined based on the PPPP, for example having a total of 8 values, wherein the priority is higher in case of a smaller value of the PPPP. Each Sidelink logical channel belongs to one Proximity-based Service Destination (ProSe Destination). Each Sidelink logical channel is allocated to one Logical Channel Group (LCG) according to its priority, and there can be a mapping relationship between an identifier (ID) of the LCG and the priority. The LCG can be defined according to the ProSe Destination, that is, logical channels directed to a same ProSe Destination belong to a same LCG.

Next, an exemplary process of configuring priorities for the Sidelink and Uulink traffics in units of logical channels and performing a resource allocation for the Uulink traffic and the Sidelink traffic will be described.
Step 1: available resources are determined, including a Sidelink resource and a Uulink resource;
Step 2: a Sidelink Logical Channel (SLC) first uses the Sidelink resource, conforming to the current Sidelink Logical Channel Priority (LCP) process, and a Uulink Logical Channel (ULC) first uses the Uulink resource, conforming to the current Uulink LCP process;
Step 3-1: after the SLC uses up the Sidelink resource, there is still data to be transmitted in the buffer, and a priority of the SLC is higher than the priority threshold PriorityThresSidelink, such that the process enters Step 4-1;
Step 3-2: after the ULC uses up the Uulink resource, there is still data to be transmitted in the buffer, and a priority of the ULC is higher than the priority threshold PriorityThresUulink, such that the process enters Step 4-2;
Step 4-1: the SLC multiplexes the Uulink resource with the ULC according to its priority setting;
Step 4-2: the ULC multiplexes the Sidelink resource with the SLC according to its priority setting.

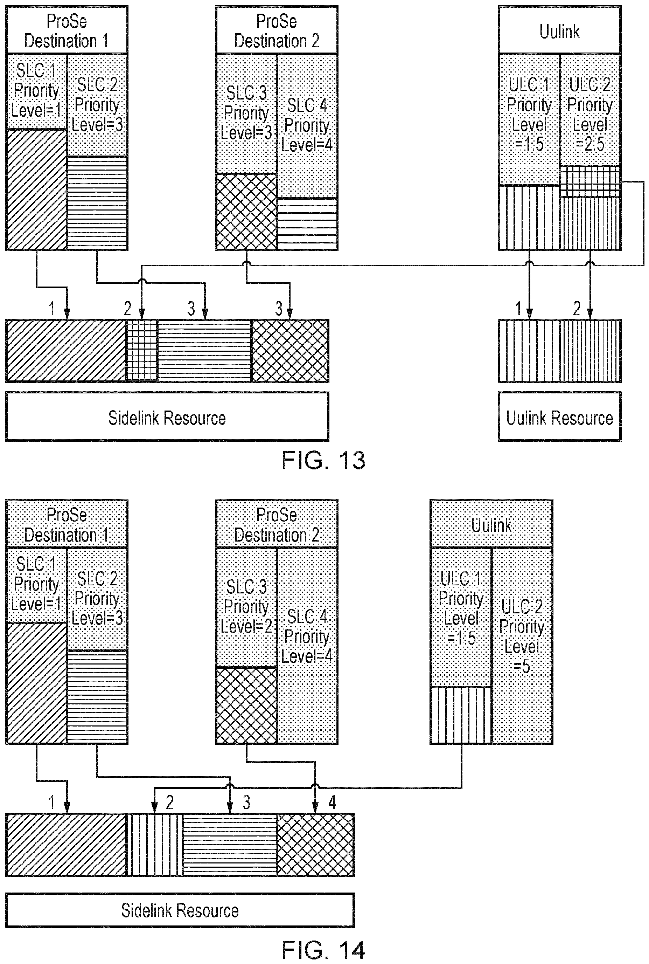

FIG. 13 shows an exemplary circumstance of allocating resources according to a resource allocation manner of an exemplary embodiment.
SLC 1 (Priority=1) and SLC 2 (Priority=3) both belong to ProSe Destination 1;
SLC 3 (Priority=3) and SLC 4 (Priority=4) both belong to ProSe Destination 2;
ULC 1 (Priority=1.5) and ULC 2 (Priority=2.5) both belong to Uulink;
PriorityThresSidelink = 3;
PriorityThresUulink = 2.5.

In the example, a Sidelink resource is allocated for a Uulink traffic with a priority higher than a threshold.

As another example, FIG. 14 shows a resource allocation manner according to an exemplary embodiment in a case where the UE has only a Sidelink resource.
SLC 1 (Priority=1) and SLC 2 (Priority=3) both belong to ProSe Destination 1;
SLC 3 (Priority=2) and SLC 4 (Priority=4) both belong to ProSe Destination 2;
ULC 1 (Priority=1.5) and ULC 2 (Priority=5) both belong to Uulink;
PriorityThresSidelink =1.5;
PriorityThresUulink =2.

In the example, the Sidelink resource is allocated for a Uulink traffic (ULC 1) with a priority higher than a threshold.

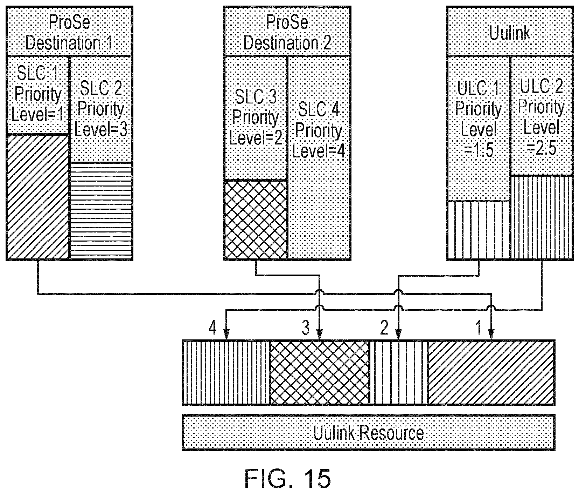

FIG. 15 shows a resource allocation manner according to an exemplary embodiment in a case where the UE has only a Uulink resource.
SLC 1 (Priority=1) and SLC 2 (Priority=3) both belong to ProSe Destination 1;
SLC 3 (Priority=2) and SLC 4 (Priority=4) both belong to ProSe Destination 2;
ULC 1 (Priority=1.5) and ULC 2 (Priority=2.5) both belong to Uulink;
PriorityThresSidelink =2.5;
PriorityThresUulink =2.

In the example, the Uulink resource is allocated for a Sidelink traffic (SCL 1) with a priority higher than a threshold

Furthermore, to prevent logical channels with low priorities from having no resources available because resources are always allocated to logical channels with high priorities, similarly to the Uulink LCP process, it is also possible to configure Prioritized Bit rate (PBR) and Bucket Size Duration (BSD) for a Sidelink logical channel.

Accordingly, according to an embodiment, the resource allocation can be performed for the traffic of the Sidelink based on Bucket Size Duration and Prioritized Bit Rate.

Specifically, the UE can, for example, maintain a variant Bj (which may be a negative) for each logical channel (including a Sidelink logical channel and a Uulink logical channel). The variant indicates the number of currently available tokens in a bucket. Bj is initialized as 0, and per Transmission Time Interval (TTI), the tokens are increased by PBR× TTI. For example, PBR=8kBps, TTI=1ms, then the number of the tokens increased in the bucket per TTI is PBR×TTI=8kBps×1ms = 8 Byte.

The value of Bj shall not exceed a maximum size of the bucket. The maximum size is PBR×BSD=8kBps×500ms = 4k Byte.

Next, an exemplary process of Sidelink LCP with PBR and BSD configurations will be described.

An MAC entity can allocate a resource for SLCs according to the following steps:
Considering only SLCs with Bj>0;
Step 0: a ProSe Destination is chosen, and among all SLCs (which may belong to different ProSe Destinations), a SLC (possibly a plurality of SLCs) to which the ProSe Destination corresponds has the highest priority;
Step 1: among all SLCs belonging to the ProSe Destination and having data to be transmitted, the resource is allocated to the SLC having the highest priority;
Step 2: if there is a surplus of the resource, the resource is allocated to the SLCs belonging to the ProSe Destination and having data to be transmitted, according to an order from high to low of the priority;
Step 3: if there is still a surplus of the resource, the resource is allocated to SLCs belonging to another ProSe Destination and having data to be transmitted, according to an order from high to low of the priority.

As to when the SLC uses the process of the Sidelink LCP with PBR and BSD configurations, as an example, there may be the following circumstances:

### [Circumstance 1]

The SLC, at the time of starting to use own sidelink resource, uses the Sidelink LCP process with PBR and BSD configurations.

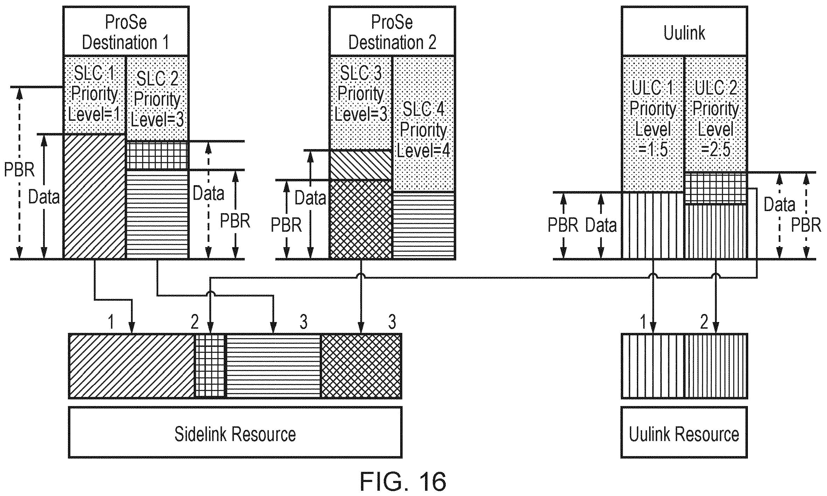

Accordingly, an example of a combined logical channel priority process is as follows (see FIG. 16):
Step 1: available resources are determined, including a Sidelink resource and a Uulink resource;
Step 2: the SLC first uses the Sidelink resource, conforming to the Sidelink LCP process with PBR and BSD configurations; the ULC first uses the Uulink resource, conforming to the current Uulink LCP process;
Step 3-1: after the SLC uses up the Sidelink resource, there is still data to be transmitted in the buffer, and a priority of the SLC is higher than the priority threshold PriorityThresSidelink, such that the process enters Step 4-1;
Step 3-2: after the ULC uses up the Uulink resource, there is still data to be transmitted in the buffer, and a priority of the ULC is higher than the priority threshold PriorityThresUulink, such that the process enters Step 4-2;
Step 4-1: the SLC multiplexes the Uulink resource with the ULC according to its priority setting;
Step 4-2: the ULC multiplexes the Sidelink resource with the SLC according to its priority setting.

### [Circumstance 2]

The SLC, at the time of starting to use own sidelink resource, first conforms to a Sidelink LCP process without PBR and BSD configurations. In the case that the Uulink resource is not enough and the Sidelink resource is surplus, when Uulink data occupies the resource of the Sidelink, the SLC starts to use the Sidelink LCP process with PBR and BSD configurations; or, In the case that the Sidelink resource is not enough and the Uulink resource is surplus, when Sidelink data occupies the resource of the Uulink, the SLC starts to use the Sidelink LCP process with PBR and BSD configurations.

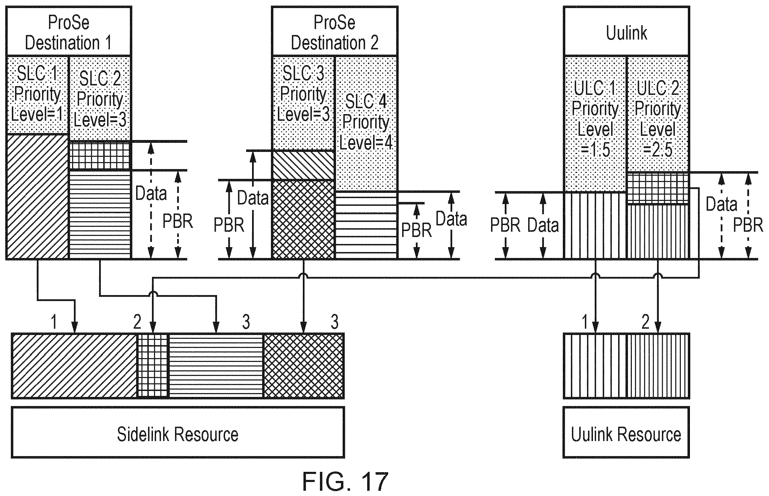

Accordingly, an example of a combined logical channel priority process is as follows (see FIG. 17):
Step 1: available resources are determined, including a Sidelink resource and a Uulink resource;
Step 2: the SLC first uses the Sidelink resource, conforming to the Sidelink LCP process without PBR and BSD configurations; the ULC first uses the Uulink resource, conforming to the Uulink LCP process without PBR and BSD configurations;
Step 3-1: after the SLC uses up the Sidelink resource, there is still data to be transmitted in the buffer, and a priority of the SLC is higher than the priority threshold PriorityThresSidelink, such that the process enters Step 4-1;
Step 3-2: after the ULC uses up the Uulink resource, there is still data to be transmitted in the buffer, and a priority of the ULC is higher than the priority threshold PriorityThresUulink, such that the process enters Step 4-2;
Step 4-1: the SLC uses the Sidelink LCP process with PBR and BSD configurations to multiplex the Uulink resource with the ULC;
Step 4-2: the ULC uses the Sidelink LCP process with PBR and BSD configurations according to its priority setting, to multiplex the Sidelink resource with the SLC.

It should be noted that, the details in the above-mentioned example are only illustrative, but not limiting.

As mentioned previously, the electronic device according to the embodiment of the present application can be used for Relay User equipment (Relay UE) side. Accordingly, according to an embodiment, the control unit 113 can be further configured to: perform control to receive, from another user equipment, data to be sent to the base station via a current user equipment; and perform control to forward, to the base station, the data received from the other user equipment (i.e., relayed User Equipment (Remote UE)).

An uplink resource of the Relay UE can be obtained by requesting to a base station through a SR or a BSR. A sidelink resource of the Relay UE can be obtained by requesting to a base station through a SR or a Sidelink BSR.

In FeD2D, sending a BSR by the Relay UE can include the following situations: forwarding a Sidelink BSR of the Remote UE; sending own BSR; and sending own Sidelink BSR.

Sending a Remote Sidelink BSR by the Remote UE to the Relay UE to request for a resource can include the following exemplary situations:

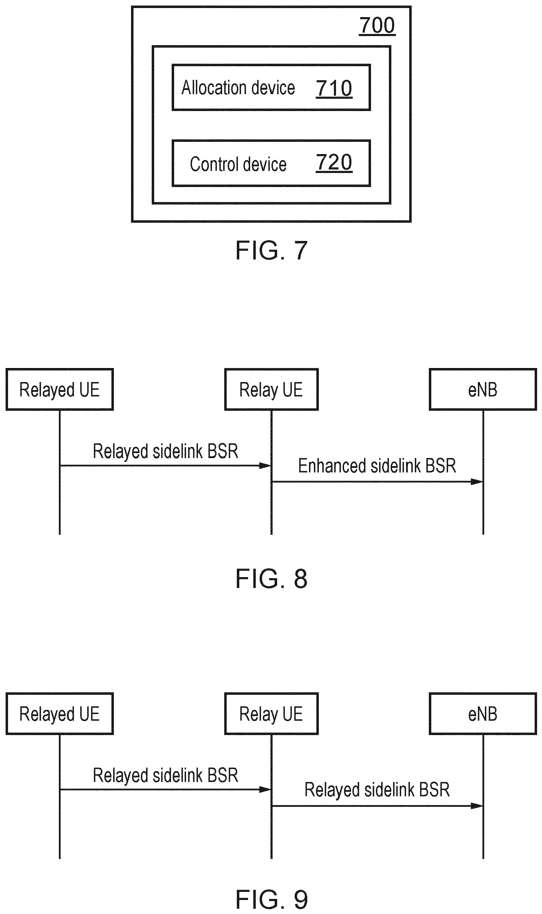

### Situation 1 (as shown in FIG. 8):

The Remote UE requests for a Sidelink resource, with a data destination being an eNB. At this time, data of the Remote UE first arrives at the Relay UE, and then the Relay UE forwards the data of the Remote UE to the eNB. In this case, when the Relay UE sends the BSR to the eNB, it is not only needed to request a resource needed for the Remote UE to send the sidelink, but also needed to request a resource needed for the Relay UE to forward the data of the Remote UE.

### Situation 2 (as shown in FIG. 9):

The Remote UE requests for a Sidelink resource, with a data destination being only a Relay UE or another UE. At this time, data of the Remote UE will only arrive at the Relay UE or the other UE, and the Relay UE does not need to forward the data of the Remote UE to an eNB. In this case, the Relay UE only needs to forward the Remote Sidelink BSR to the eNB, without needing to request a resource needed for the Relay UE to forward the data of the Remote UE.

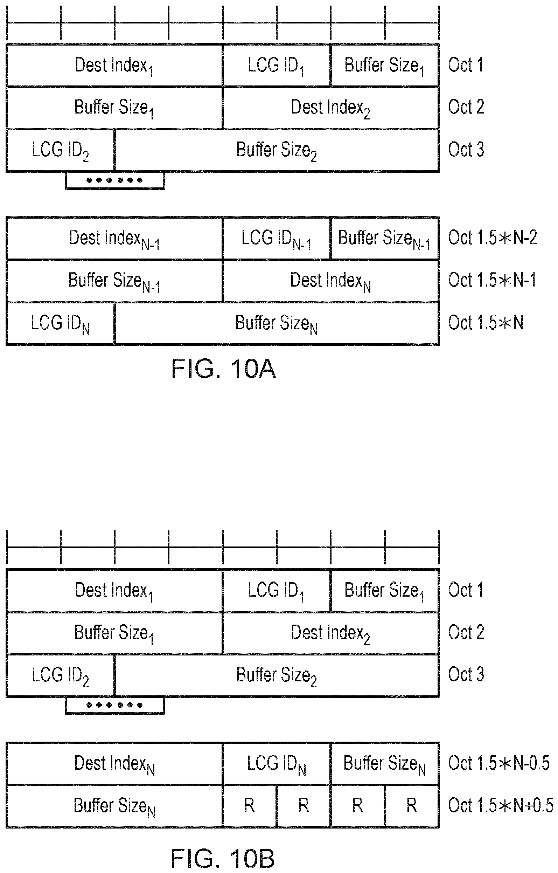

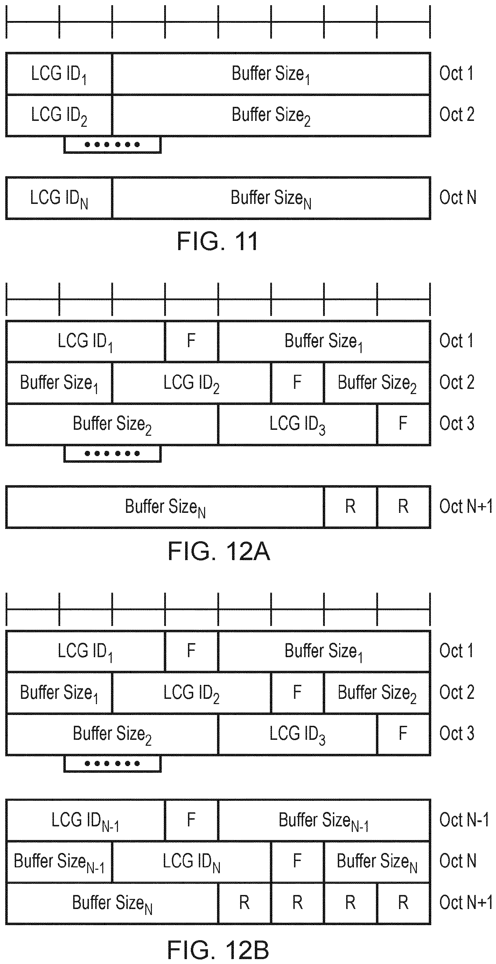

The Relay UE and the eNB can distinguish the above two situations, so as to better perform resource request and allocation. Accordingly, according to an embodiment of the present discourse, it is possible to provide two types of Remote Sidelink BSR (Type 1 and Type 2), which are as shown in FIG. 10A, FIG. 10B and FIG. 11, respectively.

Specifically, FIG. 10A shows an example of a newly-defined Type 1 Remote Sidelink BSR MAC CE, wherein N is an even. FIG. 10B shows the newly-defined Type 1 Remote Sidelink BSR MAC CE, wherein N is an odd.

For the Type 1 Remote Sidelink BSR as shown in FIG. 10A and FIG. 10B, the BSR requests for a sidelink resource for the Remote UE, and data carried by the sidelink can, for example, be divided into three classes according to a destination:
1. the destination is an eNB, but forwarding by the Relay UE is needed; at this time, it is possible to, for example, specify Dest Index (Destinatiion Index) =0000 or 1111, which indicates that a destination of the data carried by the sidelink is the eNB;
2. the destination is a Relay UE, and forwarding by the Relay UE is not needed, and Dest Index is a ProSe Destination of the Relay UE;
3. the destination is a UE other than the Relay UE, and Dest Index is a ProSe Destination of the UE.

FIG. 11 shows a newly-defined Type 2 Remote Sidelink BSR MAC CE.

For the Type 2 Remote Sidelink BSR as shown in FIG. 11, the BSR requests for a sidelink resource for the Remote UE, a destination of data carried by the sidelink is an eNB, and forwarding by the Relay UE is needed; thus, it is not needed to specifically indicate a Dest Index.

The Type 2 Remote Sidelink BSR can be regarded as a supplementary or simplified form of the Type 1 Remote Sidelink BSR. The reason for designing the Type 2 Remote Sidelink BSR is considering that a destination of most of data of the Remote UE is an eNB, that is, most of sidelink data of the Remote UE needs to be forwarded to the eNB through the Relay UE.

As an example, at Sidelink side, it is possible to define Logical Channel Identifiers (LCIDs) of the Type 1 Remote Sidelink BSR MAC CE and the Type 2 Remote Sidelink BSR MAC CE respectively as shown in Table 3 below.

**Table 3:**

| Index | LCID Value |
|---|---|
| 00000 | Preserved |
| 00001-01010 | Identifier of Logical Channel |
| 01011-11001 | Preserved |
| 11010 | Type 1 Remote Sidelink BSR |
| 11011 | Type 2 Remote Sidelink BSR |
| 11100 | Unprotected PC5-S Message |
| 11101 | PC5-S Message "Direct Safe Mode Command" and "Direct Safe Mode Command Completion" |
| 11110 | Protected Other PC5-S Messages |
| 11111 | Filling |

Furthermore, although a length of the logical channel identifier in the above exemplary embodiment is 2 bits, according to an embodiment, a length of a logical channel identifier contained in the resource request can be 3 bits or more.

New Radio (NR) has been added with traffic models. Different traffic models correspond to different requirements, such as reliability, bandwidth, latency and the like. Therefore, it is possible to increase the number of the LCGs to correspond to different physical resource types, and different physical resources satisfy the requirements of different traffic models.

The number of the LCGs in the current LTE is 4 in maximum, that is, is represented by 2 bits. According to an embodiment of the present disclosure, the number of the LCGs can be increased to 8 or more, that is, is represented by 3 or more bits. As shown in the example in FIGS. 12A through 12D, an LCG ID length is 3 bits.

Furthermore, according to an embodiment, the Relay UE can send a newly-defined enhanced Sidelink BSR (which may also referred to as an enhanced Uulink BSR, or directly become an enhanced BSR) to an eNB, so as to simultaneously request for resources for the Sidelink and the Uulink.

As shown in FIG. 2, an electronic device 200 for user equipment side according to an embodiment comprises processing circuitry 210. The processing circuitry 210 comprises an allocation unit 211, a control unit 213, and a request unit 215. Configurations of the allocation unit 211 and the control unit 213 are similar to those of the allocation unit 111 and the control unit 113 as described previously.

The request unit 215 is configured to perform control to make a resource request to the base station, for another user equipment to send data to the current user equipment via the Sidelink and the current user equipment to forward the data received from the other user equipment to the base station via the Uulink.

Further, the resource request can comprise making a resource request for the Sidelink and the Uulink by a same BSR (i.e., the above-mentioned "enhanced BSR").

Furthermore, in correspondence to the foregoing embodiment, the resource request can be made based on logical channels.

The resource request contains identification information of a logical channel, information indicating a data destination of a logical channel, and information indicating whether a logical channel is used for the Uulink or for the Sidelink.

A trigger condition for the sending of the enhanced BSR can, for example, be receiving a Remote Sidelink BSR from the Remote UE, requesting for a Sidelink resource for the Remote UE, and containing data whose destination is an eNB, that is, data of the Remote UE needs to be forwarded by the Relay UE.

Next, an exemplary process of the enhanced BSR will be described.

The Remote Sidelink BSR sent by the Remote UE to the Relay UE can trigger the Relay UE to generate a newly-defined enhanced Sidelink BSR. The enhanced Sidelink BSR can simultaneously request for resources for the following three parts of data:
1. data in a buffer of the Remote UE, i.e., a buffer size indicated in the Remote Sidelink BSR;
2. data to arrive to the Relay UE and need to be forwarded by the Relay UE, i.e., partial data in 1;
3. data in the current buffer of the Relay UE.

As such, the enhanced Sidelink BSR can apply for resources needed by the data in 2 in advance, so as to reduce latency.

The eNB needs to grasp whether an LCG ID to which the resource requested by the Relay UE corresponds belongs to the Relay UE or belongs to the Remote UE, that is, the eNB shall know whether the resource requested by the Relay UE is used for the Sidelink or the Uulink. Therefore, the enhanced BSR can be added, for example, by one bit; taking the F field in FIG. 12A through FIG. 12D as an example, the field being 0 indicates requesting for the resource for the LCG of the sidelink; the field being 1 indicates requesting for the resource for the LCG of the Uulink.

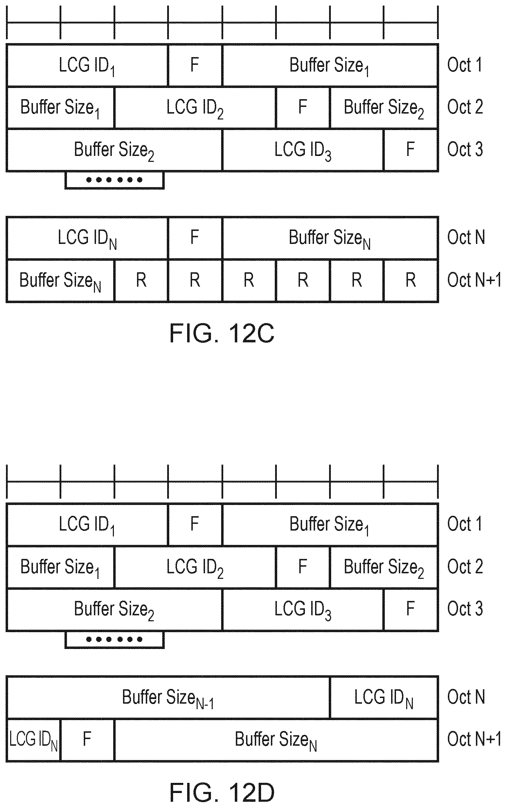

FIG. 12A through FIG. 12D show a newly-defined enhanced Sidelink BSR MAC CE (whose size is variable), wherein, FIG. 12A shows an example of a Sidelink BSR MAC CE with N%4=1; FIG. 12B shows an example of a Sidelink BSR MAC CE with N%4=2; FIG. 12C shows an example of a Sidelink BSR MAC CE with N%4=3; FIG. 12D shows an example of a Sidelink BSR MAC CE with N%4=0, wherein % represents a reminder operation.

Furthermore, an example of defining respective LCIDs for the enhanced Sidelink BSR is as shown in Table 4.

**Table 4:**

| Index | LCID Value |
|---|---|
| 00000 | Common Control Channel (CCCH) |
| 00001-01010 | Identifier of Logical Channel |
| 01011 | CCCH |
| 01011 | CCCH |
| 01101-10010 | Preserved |
| 10011 | Enhanced Sidelink BSR |
| 10100 | Recommended Bit Rate Query |
| 10101 | Semi-static Scheduling Confirmation |
| 10110 | Truncated Sidelink BSR |
| 10111 | Sidelink BSR |
| 11000 | Double-connect Power Margin Report |
| 11001 | Extended Power Margin Report |
| 11010 | Power Margin Report |
| 11011 | C-RNTI (Cell Radio Network Temporary Identifier) |
| 11100 | Truncated BSR |
| 11101 | Short BSR |
| 11110 | Long BSR |
| 11111 | Filling |

It should be noted that, the details in the above-mentioned example are only illustrative, but not limiting.

In the foregoing description of the devices according to the embodiments of the present disclosure, some processes and methods obviously have also been disclosed. Next, explanation of a wireless communication method for user equipment side according to an embodiment of the present disclosure will be given without repeating the details having been described previously.

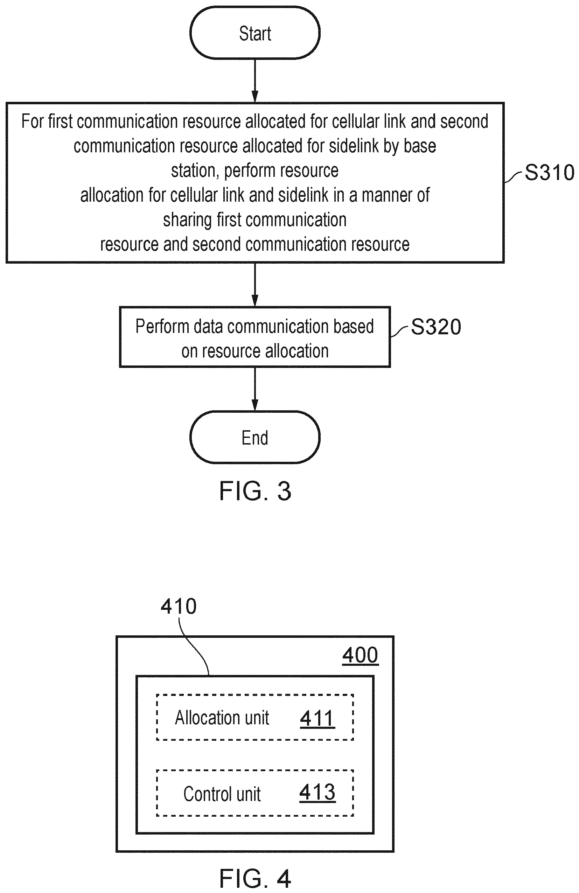

As shown in FIG. 3, a wireless communication method for user equipment side according to an embodiment comprises:
S310: for a first communication resource allocated for a Uulink and a second communication resource allocated for a Sidelink by a base station, performing resource allocation for the Uulink and the Sidelink in a manner of sharing the first communication resource and the second communication resource; and
S320: performing data communication based on the resource allocation.

Furthermore, embodiments of the present disclosure further comprise an electronic device and a wireless communication method for base station side.

As shown in FIG. 4, an electronic device 400 for base station side according to an embodiment comprises processing circuitry 410. The processing circuitry 410 comprises an allocation unit 411 and a control unit 413.

The allocation unit 411 is configured to, based on a resource request from a first user equipment, allocate a first communication resource for a Uulink and allocate a second communication resource for a Sidelink.

The control unit 413 is configured to perform control to perform data communication with the first user equipment.

The data communication can be performed through a resource allocated by the user equipment for the Uulink in a manner of sharing the first communication resource and the second communication resource.

According to an embodiment, the resource request is used for data sent by a second user equipment to the first user equipment via the Sidelink and data forwarded by the first user equipment to the base station via the Uulink.

According to an embodiment, the allocation unit 411 is configured to perform control to perform the allocation of the first communication resource and the second communication resource through a physical downlink control channel.

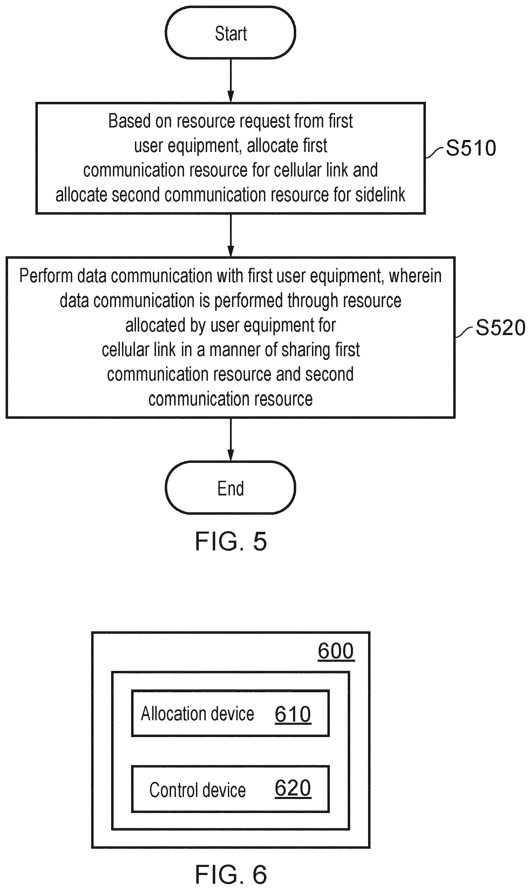

As shown in FIG. 5, a wireless communication method for base station side according to an embodiment comprises:
S510: based on a resource request from a first user equipment, allocating a first communication resource for a Uulink and allocate a second communication resource for a Sidelink; and
S520: performing data communication with the first user equipment, wherein the data communication is performed through a resource allocated by the user equipment for the Uulink in a manner of sharing the first communication resource and the second communication resource.

Embodiments of the present disclosure further comprise computer readable medium comprising executable instructions that, when executed by an information processing apparatus, cause the information processing apparatus to perform the methods according to the foregoing embodiments.

Furthermore, embodiments of the present disclosure further comprise computer readable medium comprising executable instructions that, when executed by an information processing apparatus, cause the information processing apparatus to perform the above-mentioned methods.

FIG. 6 shows an information processing apparatus 600 for user equipment side according to an embodiment, comprising: an allocation device 610 configured to, for a first communication resource allocated for a cellular link and a second communication resource allocated for a sidelink by a base station, perform resource allocation for the cellular link and the sidelink in a manner of sharing the first communication resource and the second communication resource; and a control device 620 configured to perform control to perform data communication based on the resource allocation.

FIG. 7 shows an information processing apparatus 700 for base station side according to an embodiment, comprising: an allocation device 710 configured to, based on a resource request from a first user equipment, allocating a first communication resource for a cellular link and allocate a second communication resource for a sidelink; and a control device 720 configured to perform control to perform data communication with the first user equipment, wherein the data communication is performed through a resource allocated by the user equipment for the cellular link in a manner of sharing the first communication resource and the second communication resource.

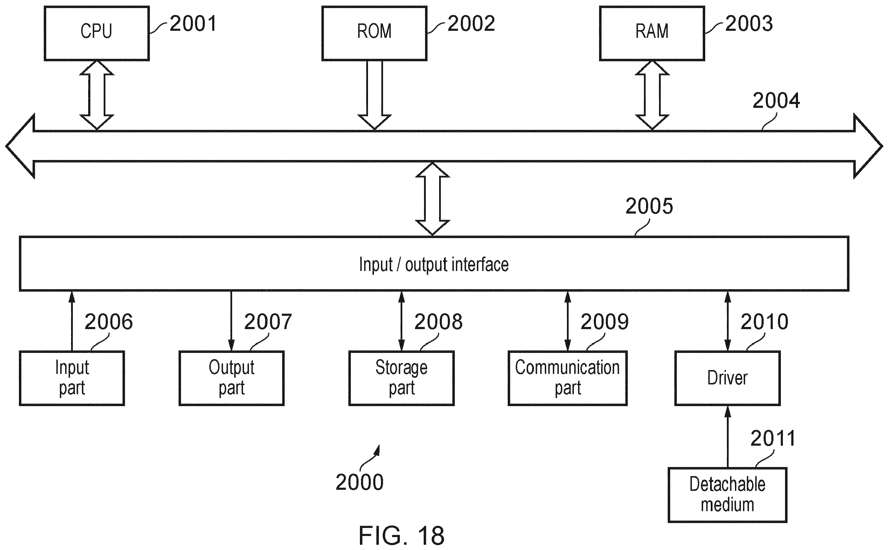

As an example, the respective steps of the above methods and the respective constituent modules and/or units of the above devices can be implemented as software, firmware, hardware or a combination thereof. In the case of implementation by software or firmware, a program constituting the software for implementing the above methods is installed from a storage medium or a network to a computer having a purpose-specific hardware structure (e.g., the universal personal computer 2000 as shown in FIG. 18). The computer, when installed with various programs, is capable of executing various functions and the like.

In FIG. 18, an operation Processing Unit (i.e., CPU) 2001 executes various processing according to a program stored in a Read-Only Memory (ROM) 2002 or a program uploaded from a storage part 2008 to a Random Access Memory (RAM) 2003. In the RAM 2003, data needed when the CPU 2001 executes various processing and the like is also stored as needed. The CPU 2001, the ROM 2002 and the RAM 2003 are linked to each other via a bus 2004. An input/output interface 2005 is also linked to the bus 2004.

The following components are linked to the input/output interface 2005: an input part 2006 (including a keyboard, a mouse and the like), an output part 2007 (including a display, such as a Cathode Ray Tube (CRT), a Liquid Crystal Display (LCD) and the like, as well as a speaker and the like), the storage part 2008 (including a hard disc and the like), and a communication part 2009 (including a network interface card such as an LAN card, a modem and the like). The communication part 2009 executes communication processing via a network such as the Internet. As needed, a driver 2010 can also be linked to the input/output interface 2005. A detachable medium 2011 such as a magnetic disc, an optical disc, a magnetic optical disc, a semiconductor memory and the like is installed on the driver 2010 as needed, such that a computer program read therefrom is installed into the storage part 2008 as needed.

In a case where the above series of processing is implemented by software, a program constituting the software is installed from a network such as the Internet or a storage medium such as the detachable medium 2011.

Those skilled in the art should appreciate that such a storage medium is not limited to the detachable medium 2011 having stored therein a program and distributed separately from an apparatus to provide the program to a user as shown in FIG. 18. Examples of the detachable medium 2011 include a magnetic disc (including a floppy disc (registered trademark)), a compact disc (including a Compact Disc Read-Only Memory (CD-ROM) and a Digital Versatile Disc (DVD)), a magneto optical disc (including a Mini Disc (MD) (registered trademark)), and a semiconductor memory. Alternatively, the storage medium can be hard discs included in the ROM 2002, the storage part 2008 and the like, in which programs are stored, and which are distributed together with the apparatus including them to users.

Embodiments of the present invention further relate to a program product having stored therein machine readable instruction codes that, when read and executed by a machine, can execute the above methods according to the embodiments of the present invention.

Accordingly, a storage medium for carrying the above program product having stored therein machine readable instruction codes is also included in the disclosure of the present invention. The storage medium includes, but is not limited to, a floppy disc, an optical disc, a magnetic optical disc, a memory card, a memory stick and the like.

Embodiments of the present application further relate to an electronic apparatus. The electronic apparatus, when used for base station side, can be realized as any type of gNB or Evolved node B (eNB), such as macro eNB and small eNB. The small eNB can be an eNB which covers a cell smaller than a macro cell, such as a pico eNB, a micro eNB and a home (femto) eNB. Alternatively, the electronic apparatus can be realized as any other type of base station, such as NodeB and Base Transceiver Station (BTS). The electronic apparatus can comprise: a main body (also referred to as a base station equipment) configured to control wireless communication; and one or more Remote Radio Heads (RRHs) arranged at different places from the main body. In addition, all the various types of terminals which will be described below can operate as base stations by temporarily or semi-persistently executing base station functions.

The electronic apparatus, when used for user equipment side, can be realized as a mobile terminal (such as an intelligent telephone, a tablet Personal Computer (PC), a notebook PC, a portable game terminal, a portable/softdog mobile router and a digital camera) or an in-vehicle terminal (such as an automobile navigation equipment). In addition, the electronic apparatus can be a wireless communication module (such as an integrated circuit module including a single or more wafers) installed on each of the above terminals.

### [Application Example With Regard to Terminal Equipment]

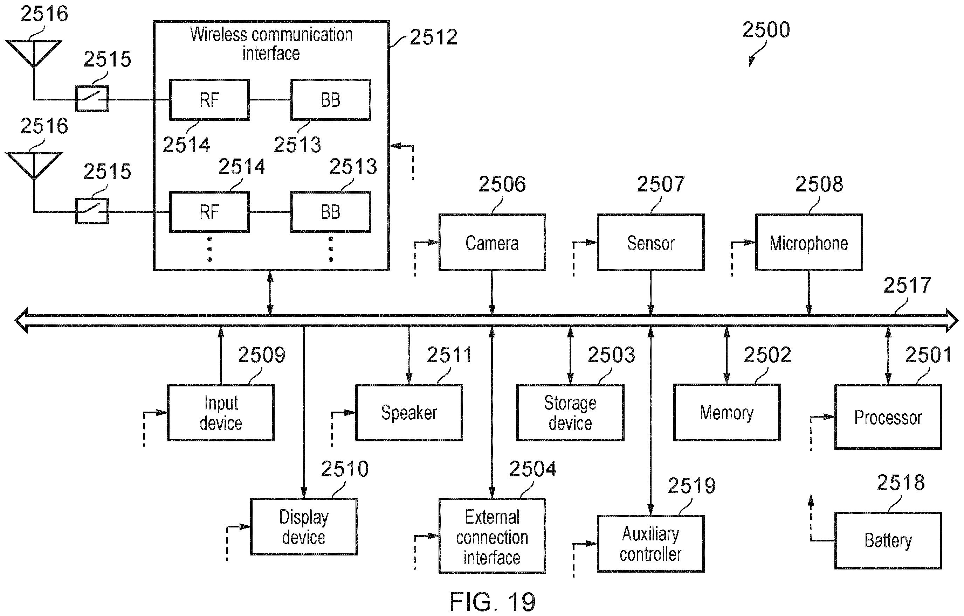

FIG. 19 is a block diagram showing an example of a schematic configuration of an intelligent telephone 2500 to which the technology of the present disclosure may be applied. The intelligent telephone 2500 comprises a processor 2501, a memory 2502, a storage device 2503, an external connection interface 2504, a camera 2506, a sensor 2507, a microphone 2508, an input device 2509, a display device 2510, a speaker 2511, a wireless communication interface 2512, one or more antenna switches 2515, one or more antennas 2516, a bus 2517, a battery 2518, and an auxiliary controller 2519.

The processor 2501 can be for example a CPU or a System on Chip (SoC), and control functions of an application layer and additional layers of the intelligent telephone 2500. The memory 2502 comprises an RAM and an ROM, and stores data and programs executed by the processor 2501. The storage device 2503 can comprise a storage medium, such as a semiconductor memory and a hard disc. The external connection interface 2504 is used for connecting an external device (such as a memory card and a Universal Serial Bus (USB) device) to an interface of the intelligent telephone 2500.

The camera 2506 comprises an image sensor (such as a Charge Coupled Device (CCD) and a Complementary Metal Oxide Semiconductor (CMOS)), and generates a captured image. The sensor 2507 can comprise a group of sensors, such as a measurement sensor, a gyro sensor, a geomagnetic sensor and an acceleration sensor. The microphone 2508 converts sound inputted to the intelligent telephone 2500 to an audio signal. The input device 2509 comprises for example a touch sensor configured to detect a touch on a screen of the display device 2510, a keypad, a keyboard, buttons or switches, and receives an operation or information inputted from a user. The display device 2510 comprises a screen (such as a Liquid Crystal Display (LCD) and an Organic Light-Emitting Diode (OLED) display), and displays an output image of the intelligent telephone 2500. The speaker 2511 converts the audio signal outputted from the intelligent telephone 2500 to sound.

The wireless communication interface 2512 supports any cellular communication scheme (such as LTE and LTE-Advanced), and executes wireless communication. The wireless communication interface 2512 generally can comprise for example a base band (BB) processor 2513 and a radio frequency (RF) circuit 2514. The BB processor 2513 can execute for example encoding/decoding, modulation/demodulation and multiplexing/demultiplexing, and execute various types of signal processing for wireless communication. Meanwhile, the RF circuit 2514 can comprise for example a frequency mixer, a filter and an amplifier, and transmit and receive a wireless signal via the antenna 2516. The wireless communication interface 2512 can be a chip module on which a BB processor 2513 and an RF circuit 2514 are integrated. As shown in FIG. 19, the wireless communication interface 2512 can comprise a plurality of BB processors 2513 and a plurality of RF circuits 2514. Although FIG. 19 shows an example in which the wireless communication interface 2512 comprises a plurality of BB processors 2513 and a plurality of RF circuits 2514, the wireless communication interface 2512 can also comprise a single BB processor 2513 or a single RF circuit 2514.

Furthermore, besides the cellular communication schemes, the wireless communication interface 2512 can support other types of wireless communication schemes, such as a short range wireless communication scheme, a near field communication scheme and a wireless Local Area Network (LAN) scheme. In this case, the wireless communication interface 2512 can comprise a BB processor 2513 and an RF circuit 2514 for each wireless communication scheme.

Each of the antenna switches 2515 switches a connection destination of the antenna 2516 among a plurality of circuits included in the wireless communication interface 2512 (for example, circuits for different wireless communication schemes).

Each of the antennas 2516 comprises a single or more antenna elements (such as a plurality of antenna elements included in an MIMO antenna), and is used for the wireless communication interface 2512 to transmit and receive a wireless signal. As shown in FIG. 19, the intelligent telephone 2500 can comprise a plurality of antennas 2516. Although FIG. 19 shows an example in which the intelligent telephone 2500 comprises a plurality of antennas 2516, the intelligent telephone 2500 can also comprise a single antenna 2516.

Furthermore, the intelligent telephone 2500 can comprise an antenna 2516 for each wireless communication scheme. In this case, the antenna switch 2515 can be omitted from the configuration of the intelligent telephone 2500.

The bus 2517 connects the processor 2501, the memory 2502, the storage device 2503, the external connection interface 2504, the camera 2506, the sensor 2507, the microphone 2508, the input device 2509, the display device 2510, the speaker 2511, the wireless communication interface 2512 and the auxiliary controller 2519 to each other. The battery 2518 supplies electric power to the respective blocks of the intelligent telephone 2500 as shown in FIG. 19 via feeder lines which are partially shown as dashed lines in the figure. The auxiliary controller 2519 for example manipulates the least necessary function of the intelligent telephone 2500 in a sleep mode.

In the intelligent telephone 2500 as shown in FIG. 19, the transceiver device of the apparatus for user equipment side according to the embodiment of the present invention can be realized by the wireless communication interface 2512. At least part of the functions of the processing circuitry and/or respective units of the electronic device or information processing apparatus for user equipment side according to the embodiment of the present invention can also be implemented by the processor 2501 or the auxiliary controller 2519. For example, part of the function of the processor 2501 can be implemented by the auxiliary controller 2519 so as to reduce power consumption of the battery 2518. Further, the processor 2501 or the auxiliary controller 2519 can implement at least part of the functions of the processing circuitry and/or respective units of the electronic device or information processing apparatus for user equipment side according to the embodiment of the present invention by executing the program stored in the memory 2501 or the storage device 2503.

### [Application Example With Regard to Base Station]

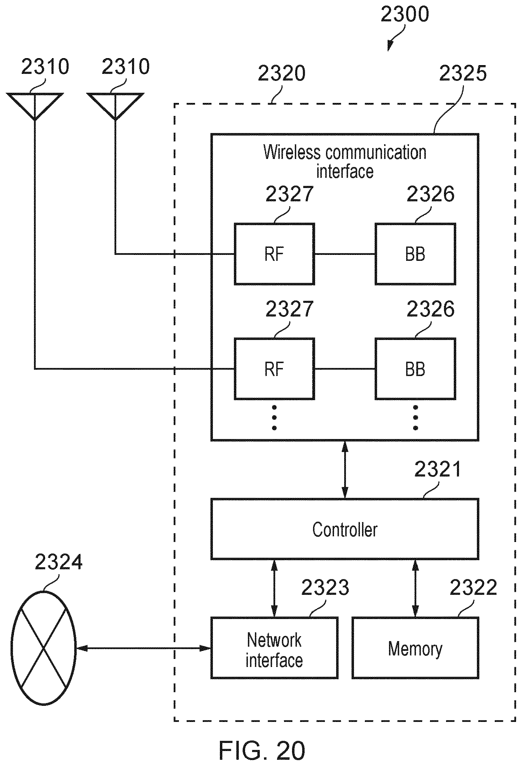

FIG. 20 is a block diagram showing an example of a schematic configuration of a base station such as an Evolved node B (eNB) to which the technology of the present disclosure may be applied. The eNB 2300 comprises one or more antennas 2310 and a base station equipment 2320. The base station equipment 2320 and each antenna 2310 can be connected with each other via a radio frequency (RF) cable.

Each of the antennas 2310 comprises a single or more antenna elements (such as a plurality of antenna elements included in a Multiple-Input Multiple-Output (MIMO) antenna), and is used for the base station equipment 2320 to transmit and receive a wireless signal. As shown in FIG. 20, the eNB 2300 can comprise a plurality of antennas 2310. For example, the plurality of antennas 2310 can be compatible with a plurality of frequency bands used by the eNB 2300. Although FIG. 20 shows an example in which the eNB 2300 comprises a plurality of antennas 2310, the eNB 2300 can also comprise a single antenna 2310.

The base station equipment 2320 can comprise a controller 2321, a memory 2322, a network interface 2323, and a wireless communication interface 2325.

The controller 2321 can be for example a CPU or a DSP, and manipulate various functions of a higher layer of the base station equipment 2320. For example, the controller 2321 generates data packets according to data in a signal processed by the wireless communication interface 2325, and transfers the generated packets via the network interface 2323. The controller 2321 can perform binding for data from a plurality of baseband processors to generate bound packets, and transfer the generated bound packets. The controller 2321 can have a logic function of executing control, which is such as radio resource control, radio bearer control, mobility management, admission rule and dispatching. The control can be performed in combination with a nearby eNB or a core network node. The memory 2322 comprises an RAM and an ROM, and stores programs executed by the controller 2321 and various types of control data (such as a terminal list, transmission power data, and scheduling data).

The network interface 2323 is a communication interface for connecting the base station equipment 2320 to a core network 2324. The controller 2321 can communicate with a core network node or another eNB via the network interface 2323. In this case, the eNB 2300 and the core network node or another eNB can be connected to each other via a logic interface (such as S1 interface and X2 interface). The network interface 2323 can also be a wired communication interface, or a wireless communication interface for a wireless backhaul. If the network interface 2323 is a wired communication interface, as compared with frequency bands used by the wireless communication interface 2325, the network interface 2323 can use higher frequency bands for wireless communication.

The wireless communication interface 2325 supports any cellular communication scheme (such as Long Term Evolution (LTE) and LTE-Advanced), and is provided with a wireless connection to a terminal located in a cell of the eNB 2300 via the antenna 2310. The wireless communication interface 2325 generally can comprise for example a BB processor 2326 and an RF circuit 2327. The BB processor 2326 can execute for example encoding/decoding, modulation/demodulation and multiplexing/demultiplexing, and execute various types of signal processing of layers (for example L1, Medium Access control (MAC), Radio Link Control (RLC) and Packet Data Convergence Protocol (PDCP)). Instead of the controller 2321, the BB processor 2326 can have part or all of the above logic functions. The BB processor 2326 can be a memory which stores a communication control program, or a module comprising a processor configured to execute a program and a related circuit. The function of the BB processor 2326 can be changed through program updating. The module can be a card or blade inserted in a slot of the base station equipment 2320. Alternatively, the module can also be a chip installed on a card or blade. Meanwhile, the RF circuit 2327 can comprise for example a frequency mixer, a filter and an amplifier, and transmit and receive a wireless signal via the antenna 2310.

As shown in FIG. 20, the wireless communication interface 2325 can comprise a plurality of BB processors 2326. For example, the plurality of BB processors 2326 can be compatible with a plurality of frequency bands used by the eNB 2300. As shown in FIG. 20, the wireless communication interface 2325 can comprise a plurality of RF circuits 2327. For example, the plurality of RF circuits 2327 can be compatible with a plurality of antenna elements. Although FIG. 20 shows an example in which the wireless communication interface 2325 comprises a plurality of BB processors 2326 and a plurality of RF circuits 2327, the wireless communication interface 2325 can also comprise a single BB processor 2326 or a single RF circuit 2327.

In the eNB 2300 as shown in FIG. 20, the transceiver device of the apparatus for base station side according to the embodiment of the present invention can be realized by the wireless communication interface 2325. At least part of the functions of the processing circuitry and/or respective units of the electronic device or information processing apparatus for base station side according to the embodiment of the present invention can also be implemented by the controller 2321. For example, the controller 2321 can implement at least part of the functions of the processing circuitry and/or respective units of the electronic device or information processing apparatus for base station side according to the embodiment of the present invention by executing a program stored in the memory 2322.

In the foregoing description of the detailed embodiments of the present invention, features described and/or shown with respect to one embodiment can be used in one or more other embodiments in an identical or similar manner, be combined with features in other embodiments, or substitute features in other embodiments.

It should be emphasized that, the term "comprise/include" used herein refers to existence of features, elements, steps or assemblies, but does not preclude existence or addition of one or more other features, elements, steps or assemblies.

In the above embodiments and examples, reference numerals composed of digits are used to represent the respective steps and/or units. Those ordinarily skilled in the art should understand that, these reference numerals aim only to facilitate description and plotting, but do not represent an order thereof or any other limitation.

Further, the methods of the present invention are not limited to be executed in the temporal order described in the specification, but can also be executed sequentially, in parallel or independently in other orders. Therefore, the execution order of the methods described in the present specification does not constitute a limitation to the technical scope of the present invention.

Although the present invention has been disclosed above by the description of the detailed embodiments of the present invention, it should be understood that all the above embodiments and examples are exemplary but not limiting. Those skilled in the art could design various modifications, improvements or equivalents with regard to the present invention within the spirit and scope of the appended claims. These modifications, improvements or equivalents should also be construed as being included within the scope of protection of the present invention.

## Claims

1. An electronic device for user equipment side, comprising processing circuitry configured to:
for a first communication resource allocated for a cellular link and a second communication resource allocated for a sidelink by a base station, perform a resource allocation for the cellular link and the sidelink in a manner of sharing the first communication resource and the second communication resource; and
perform control to perform data communication based on the resource allocation.

2. The electronic device according to claim 1, wherein the resource allocation comprises:
determining priorities for a traffic of the cellular link and a traffic of the sidelink, respectively; and
based on comparisons of the determined priorities with predetermined thresholds, performing the resource allocation for the traffic of the cellular link and the traffic of the sidelink.

3. The electronic device according to claim 2, wherein
when the priority of the traffic of the cellular link is higher than a first threshold, making the second communication resource available to the traffic of the cellular link; and/or
when the priority of the traffic of the sidelink is higher than a second threshold, making the first communication resource available to the traffic of the sidelink.

4. The electronic device according to claim 2, wherein the resource allocation further comprises:
determining a correspondence between the priority of the traffic of the cellular link and the priority of the traffic of the sidelink.

5. The electronic device according to claim 4, wherein:
when the priority of the traffic of the cellular link is higher than a first threshold and the priority of the traffic of the cellular link is higher than the priority of the traffic of the sidelink, making the second communication resource available to the traffic of the cellular link; and/or
when the priority of the traffic of the sidelink is higher than a second threshold and the priority of the traffic of the sidelink is higher than the priority of the traffic of the cellular link, making the first communication resource available to the traffic of the sidelink.

6. The electronic device according to claim 2, wherein
the priority of the traffic of the cellular link is determined based on a Quality-of-Service class identifier; and/or
the priority of the traffic of the sidelink is determined based on a ProSe per-packet priority.

7. The electronic device according to any one of claims 1 to 6, wherein the processing circuitry is configured to perform the resource allocation for the traffic of the cellular link and the traffic of the sidelink based on logical channels.

8. The electronic device according to claim 4, the processing circuitry is configured to perform the resource allocation for the traffic of the cellular link and the traffic of the sidelink based on logical channels,
wherein when the priority of the traffic of the cellular link is higher than a first threshold and the priority of the traffic of the cellular link is higher than a priority of at least one logical channel of the sidelink, making the second communication resource available to the traffic of the cellular link; and/or
when the priority of the traffic of the sidelink is higher than a second threshold and the priority of the traffic of the sidelink is higher than a priority of at least one logical channel of the cellular link, making the first communication resource available to the traffic of the sidelink.

9. The electronic device according to any one of claims 1 to 6, wherein the processing circuitry is configured to: perform the resource allocation for the traffic of the sidelink further based on Bucket Size Duration and Prioritized Bit Rate.

10. The electronic device according to claim 1, wherein the processing circuitry is further configured to:
perform control to receive, from another user equipment, data to be sent to the base station via a current user equipment; and
perform control to forward, to the base station, the data received from the other user equipment.

11. The electronic device according to claim 10, wherein the processing circuitry is further configured to:
perform control to make a resource request to the base station, for the other user equipment to send data to the current user equipment via the sidelink and the current user equipment to forward data to the base station via the cellular link.

12. The electronic device according to claim 11, wherein the resource request comprises: making a resource request for the sidelink and the cellular link by a same buffer state report.

13. The electronic device according to claim 11, wherein the resource request is made based on logical channels.

14. The electronic device according to claim 13, wherein the resource request contains one or more of the following information:
identification information of a logical channel;
information indicating a data destination of a logical channel; and
information indicating whether a logical channel is used for the cellular link or for the sidelink.

15. The electronic device according to claim 1, wherein the processing circuitry is further configured to:
perform control to make a resource request to the base station, the resource request containing a logical channel identifier having a length of 3 bits or more.

16. A wireless communication method for user equipment side, comprising:
for a first communication resource allocated for a cellular link and a second communication resource allocated for a sidelink by a base station, performing resource allocation for the cellular link and the sidelink in a manner of sharing the first communication resource and the second communication resource; and
performing data communication based on the resource allocation.

17. An electronic device for base station side, comprising processing circuitry configured to:
based on a resource request from a first user equipment, allocate a first communication resource for a cellular link and allocate a second communication resource for a sidelink; and
perform control to perform data communication with the first user equipment,
wherein the data communication is performed through a resource allocated by the user equipment for the cellular link in a manner of sharing the first communication resource and the second communication resource.

18. The electronic device according to claim 17, wherein the resource request is used for data sent by a second user equipment to the first user equipment via the sidelink and data forwarded by the first user equipment to the base station via the cellular link.

19. The electronic device according to claim 17, wherein the processing circuitry is configured to perform control to perform the allocation of the first communication resource and the second communication resource through a physical downlink control channel.

20. A wireless communication method for base station side, comprising:
based on a resource request from a first user equipment, allocating a first communication resource for a cellular link and allocate a second communication resource for a sidelink; and
performing data communication with the first user equipment,
wherein the data communication is performed through a resource allocated by the user equipment for the cellular link in a manner of sharing the first communication resource and the second communication resource.

21. A computer readable medium comprising executable instructions that, when executed by an information processing apparatus, cause the information processing apparatus to perform the method according to claim 16 or claim 20.
